# FASCICULE DE BREVET EUROPEEN

(11) **EP 2 466 189 B1**
(45) Date de publication et mention de la délivrance du brevet: **19.06.2013**
(21) Numéro de dépôt: 11192303.3
(22) Date de dépôt: 07.12.2011
(51) Int. Cl.: F17D 1/04, F17D 1/075

(54) **Procédé et dispositif de limitation du volume de gaz perdu lors d'une intervention sur un réseau de transport de gaz**
Verfahren und Vorrichtung zur Begrenzung der Gasvolumen verloren bei einer Operation auf ein Netzwerk von Gastransport
Method and device for limiting the volume of gas lost during an intervention on a gas transport network

(30) Priorité: 15.12.2010 FR 1060586
(43) Date de publication de la demande: 20.06.2012
(73) Titulaire: GRTGAZ, 75017 Paris (FR)
(72) Inventeur: Decocq, Francis, 59113 Seclin (FR); Cattoen, Gerard, 59274 Marquillies (FR)
(74) Mandataire: Chauveau, Ariane

(56) Documents cités:
- DE-A1- 4 401 283
- DE-A1- 19 614 445
- GB-A- 2 352 808

## Description

### DOMAINE TECHNIQUE DE L'INVENTION

La présente invention concerne un procédé et un dispositif de limitation du volume de gaz perdu lors d'une intervention sur un réseau de transport de gaz. Elle s'applique, notamment, aux postes de détente de gaz haute pression comportant un détendeur à pilotage par déversement. Elle peut être aussi adaptée sur un poste de détente comportant un détendeur à pilotage par versement.

### ARRIERE PLAN TECHNOLOGIQUE DE L'INVENTION

Lors de différentes interventions sur un réseau de transport de gaz, en particulier lors du changement d'un filtre, lors de la maintenance d'un pilote de détendeur et lors d'un diagnostic de pannes, une purge provoque la perte, par mise à l'évent, d'un important volume de gaz. Cette purge a des conséquences néfastes en termes financiers, écologiques (le gaz naturel est un gaz à effet de serre) et de sécurité des personnes. De plus, la pollution sonore peut être élevée (le volume sonore de la purge peut atteindre 150 dB) et elle impose que les environs du poste de détente soit une zone répondant à la norme de sécurité « Atex ».

A titre d'exemple, entre les deux vannes de sectionnement entourant un détendeur haute pression (par exemple de 67 à 42 bars), environ 100 m³ sont purgés par intervention. Le nombre d'interventions de maintenance est d'au moins 3 ou 4 fois par an.

Actuellement, pour réduire les volumes de gaz purgés, on limite, à la conception, les distances entre les vannes de sectionnement et le détendeur. La réduction du volume de gaz perdu est cependant limitée.

Le document DE 196 14 445 A1 divulgue un dispositif, respectif un procédé de détente de gaz connu de l'art antérieur.

### DESCRIPTION GENERALE DE L'INVENTION

La présente invention vise à remédier à tout ou partie de ces inconvénients.

A cet effet, selon un premier aspect, la présente invention vise un dispositif de détente de gaz comportant un détendeur de gaz, un pilote de détendeur et un porte-filtre portant un filtre et deux vannes de sectionnement placées en amont et en aval du détendeur de gaz, caractérisé en ce qu'il comporte, en outre :
- deux vannes à quatre voies adaptées à isoler, du détendeur et des tuyauteries allant du détendeur aux vannes de sectionnement, le porte-filtre et le pilote, et
- un robinet de purge pour mettre à l'évent le volume isolé limité entre les deux vannes à quatre voies.

Grâce à ces dispositions, pour intervenir sur le porte-filtre et/ou sur le pilote, on ne purge que le volume isolé par les vannes à quatre voies. La réduction du volume de gaz perdu est ainsi très importante.

En d'autres termes, le dispositif possède deux états. Dans un premier état, dit d'exploitation, le dispositif fonctionne comme un détendeur de type connu. Dans un deuxième état, dit d'intervention, on ferme les vannes de sectionnement, on bascule simultanément les deux vannes à quatre voies et le détendeur est alors alimenté directement, sans passage par le filtre. Puis, grâce au robinet de purge, le porte-filtre et le pilote sont purgés (seulement quelques litres de gaz sont alors perdus), on accède au porte filtre ou au pilote, hors gaz, pour tout changement, réparation ou vérification. A la fin de cette intervention sur le filtre et/ou le porte-filtre, on rebascule les vannes à quatre voies puis les vannes de sectionnement en position d'exploitation. On note que le détendeur n'est pas sollicité pendant cette phase d'intervention.

Selon des caractéristiques particulières, les deux vannes à quatre voies comportent :
- une première vanne à quatre voies dont une voie, reliée à une tuyauterie dite
   « amont », allant de la vanne de sectionnement amont au détendeur de gaz et une voie reliée au porte-filtre, sont chacune reliée, selon la position de la première vanne à quatre voies, soit à une voie menant au porte-filtre, soit à une voie ramenant au détendeur de gaz et
- une deuxième vanne à quatre voies dont une voie, reliée à une tuyauterie dite
   « aval », allant du détendeur de gaz à la vanne de sectionnement aval et une voie reliée au pilote de détendeur, sont chacune reliée, selon la position de la deuxième vanne à quatre voies, soit à une voie menant au pilote de détenteur, soit à une voie ramenant à la tuyauterie aval.

Ainsi, pour isoler le porte-filtre et le pilote, on actionne les vannes à quatre voies pour relier entre elles, les voies de la première vanne à quatre voies reliées au porte-filtre, d'une part, et les voies de la deuxième vanne à quatre voies reliées au pilote, d'autre part.

Selon des caractéristiques particulières, le dispositif objet de la présente invention comporte, en outre, un moyen d'actionnement simultané des vannes à quatre voies pour, dans une position, relier entre elles, les voies de la première vanne à quatre voies reliées au porte-filtre, d'une part, et les voies de la deuxième vanne à quatre voies au pilote, d'autre part.

Grâce à ces dispositions, les risques d'erreur de manipulation et de perte de gaz supplémentaire sont réduits.

Selon des caractéristiques particulières, le moyen d'actionnement comporte un levier relié aux deux vannes à quatre voies pour les basculer simultanément de l'état ouvert à l'état fermé, et inversement.

Le changement de position simultané des deux vannes à quatre voies est ainsi facilité.

Selon des caractéristiques particulières, le dispositif objet de la présente invention comporte, en outre, des canalisations en acier inoxydable formant au moins une partie des voies reliées aux vannes à quatre voies.

Selon des caractéristiques particulières, le dispositif objet de la présente invention comporte, en outre, des perforations dans des pièces qui supportent les vannes à quatre voies afin de réaliser des consignations dans les deux positions des vannes à quatre voies.

Selon un deuxième aspect, la présente invention vise un procédé de détente de gaz, qui comporte une phase d'exploitation, dans laquelle on détend le gaz à travers un détendeur muni d'un filtre porté par un porte-filtre et un pilote, caractérisé en ce qu'il comporte une phase d'intervention comportant :
- une étape de basculement de deux vannes à quatre voies pour isoler, du détendeur et des tuyauteries allant du détendeur aux vannes de sectionnement, le porte-filtre et le pilote,
- une étape de purge du volume isolé,
- une étape d'accès au porte-filtre et/ou au pilote, et
- une étape de basculement des vannes à quatre voies pour mettre sous gaz le porte-filtre et le pilote.

Les avantages, buts et caractéristiques de ce procédé étant similaires à ceux du dispositif objet de la présente invention, ils ne sont pas rappelés ici.

### BREVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, un poste de détente de gaz haute pression comportant un détendeur à pilotage par déversement, de type connu,
- la figure 2 représente, schématiquement, un mode de réalisation particulier d'un dispositif de détente de gaz objet de la présente invention, dans une première configuration,
- la figure 3 représente le dispositif illustré en figure 2, dans une deuxième configuration,
- la figure 4 représente, en perspective, un assemblage de deux vannes à quatre voies, et
- la figure 5 représente, sous forme d'un logigramme, des étapes d'un mode de réalisation particulier du procédé objet de la présente invention.

### DESCRIPTION DETAILLEE DE MODES DE REALISATION PREFERES DE L'INVENTION

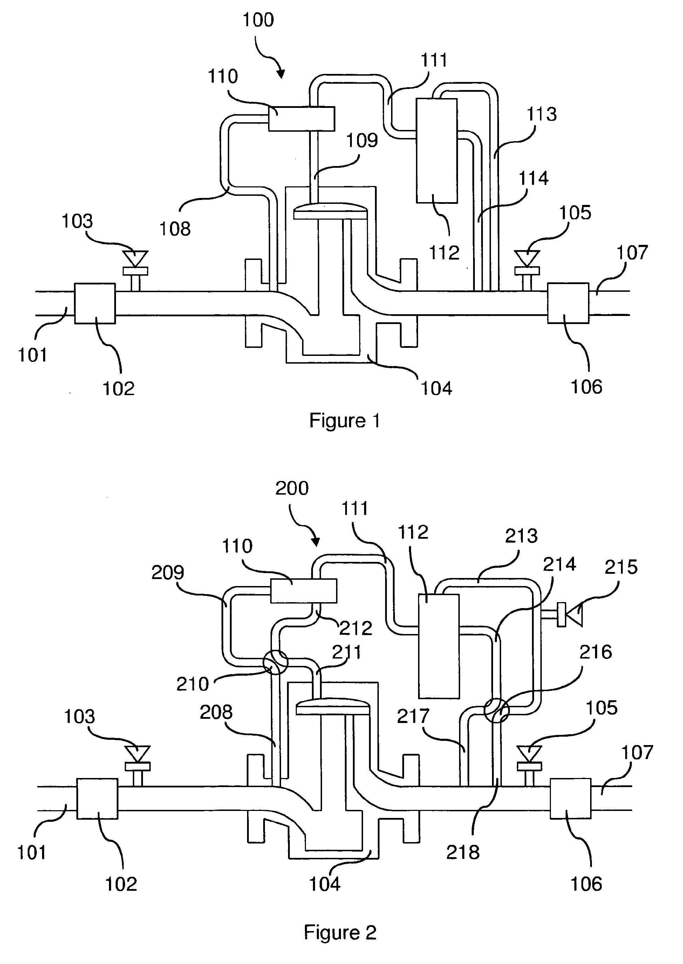

On note, dès à présent, que les figures 1 à 3 ne sont pas à l'échelle.

On observe, en figure 1, un poste de détente 100, de type connu, comportant successivement, depuis une tuyauterie d'entrée de gaz haute pression 101 et une tuyauterie de sortie de gaz basse pression 107, une vanne de sectionnement amont 102, un robinet de purge amont 103, un détendeur 104, un robinet de purge aval 105 et une vanne de sectionnement aval 106.

Le détendeur 104 est associé à un porte-filtre 110, par l'intermédiaire d'une tuyauterie 108 de prélèvement de gaz haute pression et d'une tuyauterie 109 de prélèvement de gaz de détendeur et à un pilote 112 de détendeur, par l'intermédiaire de deux tuyauteries de prélèvement de gaz basse pression 113 et 114. Une tuyauterie intermédiaire 111 relie le porte-filtre 110 au pilote 112. Le pilote 112 effectue un pilotage par déversement. En variante, un pilote effectue un pilotage par versement.

Comme on le comprend aisément, chaque intervention interne à ce détendeur 104, au porte-filtre 110 ou au détendeur 104 nécessite de fermer les vannes de sectionnement 102 et 106 et à purger le gaz contenu dans la section ainsi isolée, ce qui représente une grande quantité de gaz perdue et des risques pour les intervenants et pour l'environnement immédiat du détendeur.

Dans le mode de réalisation d'un dispositif 200 de détente de gaz illustré en figure 2, on retrouve les éléments 101 à 107, 110, 111 et 112. Cependant, le circuit de tuyauterie est modifié pour incorporer deux vannes à quatre voies : la vanne amont 210 et la vanne aval 216.

La vanne amont 210 est reliée :
- à une tuyauterie 208 de prélèvement de gaz haute pression,
- à une tuyauterie 211 de prélèvement de gaz du détendeur 104,
- à une tuyauterie 209 de transfert de gaz haute-pression vers le porte-filtre 110, et
- à une tuyauterie 212 de transfert de gaz de détendeur vers le porte-filtre 110.

La vanne aval 216 est reliée :
- à une tuyauterie 213 de sortie du pilote 112
- à une tuyauterie 214 d'entrée dans le pilote 112 et
- à deux tuyauteries 217 et 218 de prélèvement de gaz basse pression.

Un robinet de purge additionnel 215 est prévu sur l'une des tuyauteries 209, 212, 213 et 214 (sur la tuyauterie 213, en figure 2).

Dans la première configuration, dite « exploitation », illustrée en figure 2, la vanne à quatre voies amont 210 relie entre elles les tuyauteries 208 et 209 et relie entre elles les tuyauteries 211 et 212. Dans cette première configuration, la vanne à quatre voies aval 216 relie entre elles les tuyauteries 214 et 217 et relie entre elles les tuyauteries 213 et 218.

Ainsi, dans la première configuration, le fonctionnement du dispositif de détente est identique à ce qu'il est dans un poste de détente classique.

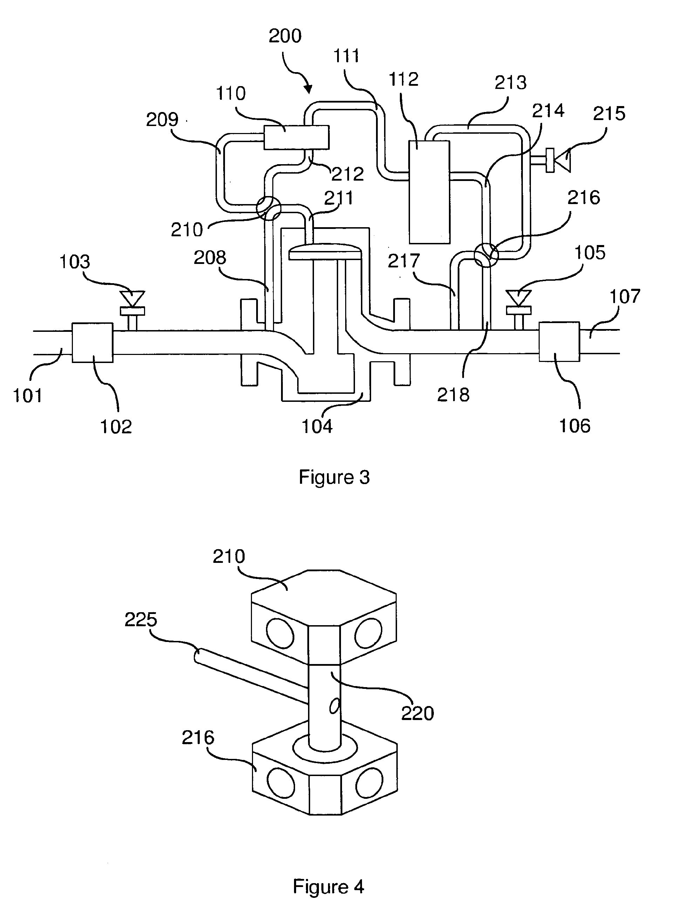

En revanche, dans la deuxième configuration, dite « intervention », illustrée en figure 3, la vanne à quatre voies amont 210 relie entre elles les tuyauteries 208 et 211 et relie entre elles les tuyauteries 209 et 212. Dans cette deuxième configuration, la vanne à quatre voies aval 216 relie entre elles les tuyauteries 217 et 218 et relie entre elles les tuyauteries 213 et 214.

Ainsi, dans la deuxième configuration, un circuit de faible volume est isolé et une intervention sur le porte-filtre 110 ou sur le pilote 112 ne nécessite que la purge de ce faible volume. Cette purge est effectuée par l'intermédiaire du robinet de purge 215.

Ainsi, la mise en oeuvre de la présente invention permet d'intervenir sur le porte-filtre et sur le pilote 112 sans avoir besoin de purger la totalité du volume compris entre les deux vannes de sectionnement 102 et 106.

Préférentiellement, les tuyauteries 208 à 218 sont réalisées en acier inoxydable, par exemple en 12/10.

Préférentiellement, des perforations dans les pièces qui supportent les vannes à quatre voies 210 et 216 sont prévues afin de réaliser des consignations dans les deux positions de ces vannes correspondant aux deux configurations du circuit.

Comme illustré en figure 4, pour pouvoir commuter simultanément les deux vannes à quatre voies 210 et 216, on les relie par un arbre 220 muni d'un levier central 225.

Pour réaliser une intervention :
- éventuellement, on ferme les vannes de sectionnement amont et aval 102 et 106,
- on bascule simultanément les deux vannes à quatre voies 210 et 216 grâce au levier central 225,
- à partir de ce moment, le détendeur 104 est alimenté directement (sans passage du gaz par le filtre incorporé dans le porte-filtre 110),
- grâce au robinet de purge 215, le porte-filtre 110 et le pilote 112 sont purgés, ce qui représente une perte de quelques litres de gaz,
- on accède au porte-filtre 110 hors gaz pour changer le filtre ou pour toute vérification du pilote 112 ou du porte-filtre 110, notamment pour le diagnostic de pannes,
- on rebascule ensuite les deux vannes à quatre voies 210 et 216 en position exploitation grâce au levier central 225, et
- si les vannes de sectionnement 102 et 106 ont été initialement fermées, on les ré-ouvre.

On note que le détendeur 104 n'est pas sollicité pendant cette phase d'intervention.

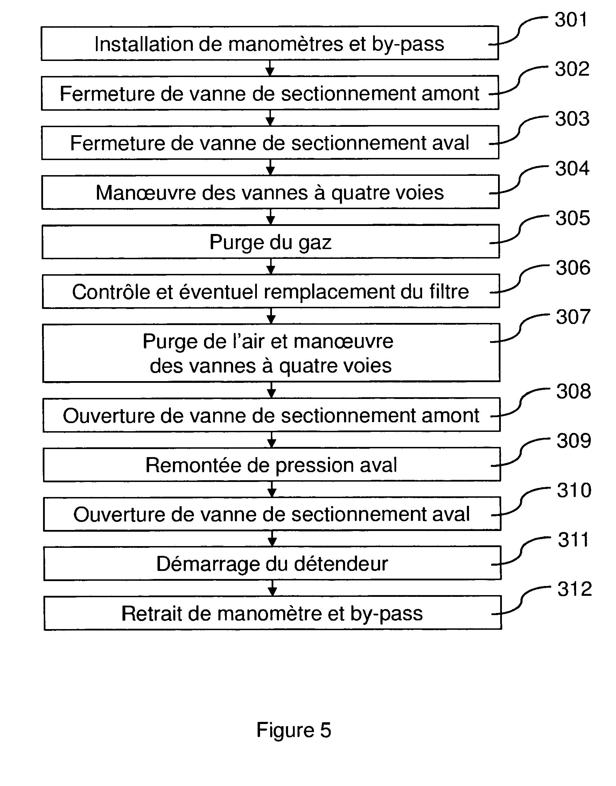

On détaille, ci-dessous, un mode opératoire, dans lesquels les pressions sont données à titre d'exemple. Ce mode opératoire, illustré en figure 5, concerne une procédure d'intervention sur un poste de pré-détente équipé d'un dispositif objet de l'invention, au cours d'une intervention de maintenance programmée.

Au cours d'une étape 301, on avertit le centre de surveillance régional de la présence du ou des techniciens de maintenance sur le site. Puis, on installe des manomètres de contrôle de pression à l'aval du poste de détente afin de contrôler la pression de livraison ainsi qu'à l'amont et à l'aval du détendeur de la ligne principale. Ensuite, on prépare un « By-Pass » du poste de pré-détente pour alimenter le réseau aval en manuel si la ligne de détente auxiliaire ne fonctionne pas. En général la préparation du by-pass consiste à déverrouiller les volants de manoeuvre de leurs cadenas et à vérifier que le ou les robinets sont manoeuvrables et non bloqués. Au cours d'une étape 302, on ferme la vanne de sectionnement amont de la ligne principale. Puis, on vérifie la prise de relais de la ligne de secours à 40 bars. Au cours d'une étape 303, on ferme la vanne aval de la ligne principale.

Au cours d'une étape 304, on retire le cadenas de verrouillage sur le bras de manoeuvre des vannes à quatre voies. Puis on manoeuvre les vannes à quatre voies, pour isoler le porte-filtre 110 et le pilote 112. Le poste de détendeur est alors en configuration d'intervention. On installe alors un cadenas en sécurité sur le levier de manoeuvre 225 des vannes à quatre voies 210, 216, afin d'éviter les manoeuvres intempestives lors de l'intervention.

Au cours d'une étape 305, on purge le gaz du circuit de pilotage, c'est-à-dire la partie isolée par les vannes à quatre voies, par action du robinet de purge 215 et on laisse ce robinet ouvert. Au cours d'une étape 306, on dé-raccorde la tubulure sous le filtre, on contrôle le filtre et on le remplace si nécessaire. Puis, on réinstalle la tubulure sous le filtre.

Au cours d'une étape 307, on retire le cadenas sur le bras de manoeuvre des vannes à quatre voies. Puis, on purge l'air du circuit de pilotage en manoeuvrant doucement le levier qui commande les vannes à quatre voies, puis on ferme le robinet de purge. On réinstalle ensuite le cadenas sur le levier de commande des vannes à quatre voies après ouverture complète de ces vannes. On vérifie alors l'absence de fuite sur l'ensemble du circuit.

Au cours d'une étape 308, on ouvre la vanne de sectionnement amont de la ligne principale et on vérifie les pressions amont (par exemple, 67.7 bars maxi) et aval du détendeur (par exemple 42 bars). Au cours d'une étape 309, on remonte la pression aval du réseau en s'aidant du by-pass à une valeur légèrement supérieure à la pression de réglage du détendeur principale, soit environ 43 bars. Au cours d'une étape 310, on ouvre la vanne de sectionnement aval de la ligne principale. Au cours d'une étape 311, on referme l'alimentation du by-pass pour que le détendeur de la ligne principale puisse démarrer à 42 bars. Au cours d'une étape 312, on affine, si nécessaire, la valeur de réglage sur le pilote du détendeur principal. On démonte ensuite les manomètres et on reconfigure les différents éléments du poste. Enfin, on trace l'intervention et on informe le centre de surveillance régional de la fin d'intervention.

On note que la mise en oeuvre de la présente invention ne nécessite aucune modification des caractéristiques techniques du détendeur, du porte filtre 110 ou du pilote 112.

## Revendications

1. Dispositif (200) de détente de gaz comportant un détendeur de gaz (104), un pilote (112) de détendeur et un porte-filtre (110) portant un filtre et deux vannes de sectionnement (102, 106) placées en amont et en aval du détendeur de gaz, **caractérisé en ce qu'**il comporte, en outre :
- deux vannes à quatre voies (210, 216) adaptées à isoler, du détendeur et des tuyauteries allant du détendeur aux vannes de sectionnement, le porte-filtre et le pilote, et
- un robinet de purge (215) pour mettre à l'évent le volume isolé limité entre les deux vannes à quatre voies.

2. Dispositif (200) selon la revendication 1, dans lequel les deux vannes à quatre voies (210, 216) comportent :
- une première vanne à quatre voies (210) dont une voie (208), reliée à une tuyauterie dite « amont », allant de la vanne de sectionnement amont (102) au détendeur de gaz (104) et une voie (212) reliée au porte-filtre (110), sont chacune reliée, selon la position de la première vanne à quatre voies, soit à une voie (209) menant au porte-filtre, soit à une voie (211) ramenant au détendeur de gaz, et
- une deuxième vanne à quatre voies (216) dont une voie (218), reliée à une tuyauterie dite « aval », allant du détendeur de gaz à la vanne de sectionnement aval (106) et une voie (214) reliée au pilote (112) de détendeur, sont chacune reliée, selon la position de la deuxième vanne à quatre voies, soit à une voie (213) menant au pilote de détenteur, soit à une voie (217) ramenant à la tuyauterie aval.

3. Dispositif (200) selon la revendication 2, qui comporte, en outre, un moyen (220, 225) d'actionnement simultané des vannes à quatre voies (210, 216) pour, dans une position, relier entre elles, les voies (209, 212) de la première vanne à quatre voies reliées au porte-filtre (110), d'une part, et les voies (213, 214) de la deuxième vanne à quatre voies au pilote (112), d'autre part.

4. Dispositif (200) selon la revendication 3, dans lequel le moyen (220, 225) d'actionnement comporte un levier (225) relié aux deux vannes à quatre voies (210, 216) pour les basculer simultanément d'une première position à une deuxième position, et inversement.

5. Dispositif (200) selon l'une quelconque des revendications 1 à 4, qui comporte, en outre, des canalisations en acier inoxydable formant au moins une partie des voies reliées aux vannes à quatre voies (210, 216).

6. Dispositif (200) selon l'une quelconque des revendications 1 à 5, qui comporte, en outre, des perforations dans des pièces qui supportent les vannes à quatre voies (210, 216) afin de réaliser des consignations dans les deux positions des vannes à quatre voies.

7. Procédé de détente de gaz, qui comporte une phase d'exploitation, dans laquelle on détend le gaz à travers un détendeur (104) muni d'un filtre porté par un porte-filtre (110) et un pilote (112), **caractérisé en ce qu'**il comporte une phase d'intervention comportant :
- une étape (304) de basculement de deux vannes à quatre voies (210, 216) pour isoler, du détendeur et des tuyauteries allant du détendeur aux vannes de sectionnement, le porte-filtre et le pilote,
- une étape (305) de purge du volume isolé,
- une étape ((306) d'accès au porte-filtre et/ou au pilote, et
- une étape (307) de basculement des vannes à quatre voies pour mettre sous gaz le porte-filtre et le pilote.

8. Procédé selon la revendication 7, qui comporte, en outre :
- une étape (302, 303) de fermeture de vannes de sectionnement (102, 106) avant l'étape (304) de basculement de deux vannes à quatre voies (210, 216) pour isoler le porte-filtre et le pilote, et
- une étape (308 à 310) d'ouverture des vannes de sectionnement en position d'exploitation après l'étape (307) de basculement des vannes à quatre voies pour mettre sous gaz le porte-filtre et le pilote.

## Patentansprüche

1. Vorrichtung (200) zur Entspannung eines Gases, bestehend aus einem Gasdruckminderer (104), einem Druckminderungsregler (112) und einem Filterhalter (110) mit einem Filter und zwei Absperrventilen (102, 106), welche vor oder nach dem Gasdruckminderer angebracht sind, **dadurch gekennzeichnet, dass** sie unter Anderem besteht aus:
- zwei Vierwegeventilen (210, 216), die für die Trennung des Filterhalters und des Reglers vom Druckminderer und den Rohrleitungen, die vom Druckminderer zu den Absperrventilen verlaufen, geeignet sind, und
- einem Ablasshahn (215), um das begrenzte und zwischen den zwei Vierwegeventilen abgetrennte Volumen an die Druckausgleichsöffnung abzugeben.

2. Vorrichtung (200) nach Anspruch 1, in der die zwei Vierwegeventile (210, 216):
- ein erstes Vierwegeventil (210) von dem ein Gasweg (208) mit einer als "flussaufwärts" bezeichneten Rohrleitung verbunden ist, die von dem sich flussaufwärts befindlichen Absperrventil (102) bis zum Gasdruckminderer (104) verläuft, und einem Gasweg (212), der mit dem Filterhalter (110) verbunden ist, die beide je nach Position des ersten Vierwegeventils entweder mit einem Gasweg (209), der zum Filterhalter führt, oder mit einem Gasweg (211), der zum Gasdruckminderer führt, verbunden sind, und
- ein zweites Vierwegeventil (216) von dem ein Gasweg (218) mit einer als "flussabwärts" bezeichneten Rohrleitung verbunden ist, die vom Gasdruckminderer zum sich flussabwärts befindlichen Absperrventil (106) verläuft, und einem Gasweg (214), der mit dem Druckminderungsregler (112) verbunden ist, die beide je nach Position des zweiten Vierwegeventils entweder mit einem Gasweg (213), der zum Druckminderungsregler führt, oder mit einem Gasweg (217), der zur sich flussabwärts befindlichen Rohrleitung führt, verbunden sind, aufweisen.

3. Vorrichtung (200) nach Anspruch 2, bestehend unter Anderem aus einem Mittel (220, 225) zur gleichzeitigen Betätigung der Vierwegeventile (210, 216), um einerseits in einer Position die Gaswege (209, 212) vom ersten Vierwegeventil mit dem Filterhalter (110) und andererseits die Gaswege (213, 214) vom zweiten Vierwegeventil mit dem Regler (112) zu verbinden.

4. Vorrichtung (200) nach Anspruch 3, bei der das Betätigungsmittel (220, 225) einen Hebel (225) aufweist, der mit den zwei Vierwegeventilen (210, 216) verbunden ist, um sie gleichzeitig von einer ersten Position zu einer zweiten Position umzuschalten, und umgekehrt.

5. Vorrichtung (200) nach irgendeinem der Ansprüche 1 bis 4, bestehend unter Anderem aus Rohrleitungen aus nichtrostendem Stahl, die mindestens einen Teil der Gaswege bilden, die mit den Vierwegeventilen (210, 216) verbunden sind.

6. Vorrichtung (200) nach irgendeinem der Ansprüche 1 bis 5, die unter Anderem Bohrungen in den Teilen aufweist, die die Vierwegeventile (210, 216) halten, um die Vierwegeventile in beiden Positionen versiegeln zu können.

7. Verfahren zur Entspannung eines Gases, das eine Betriebsphase aufweist, bei der das Gas mit Hilfe eines Gasdruckminderers (104), der mit einem von einem Filterhalter (110) getragenen Filter und einem Regler (112) ausgestattet ist, entspannt wird, das **gekennzeichnet ist durch** eine Eingriffsphase mit:
- einer Etappe (304) des Umschaltens der beiden Vierwegeventile (210, 216), um den Filterhalter und den Regler vom Druckminderer und von den Rohrleitungen, die vom Druckminderer zu den Absperrventilen verlaufen, zu trennen,
- einer Etappe (305) des Ablassens des abgetrennten Volumens,
- einer Etappe (306) des Zugangs zum Filterhalter und/ oder zum Regler, und
- einer Etappe (307) des Umschaltens der Vierwegeventile, um Gas in den Filterhalter und den Regler einzulassen.

8. Verfahren nach Anspruch 7, bestehend unter Anderem aus:
- einer Etappe (302, 303) des Schließens der Absperrventile (102, 106) vor der Etappe (304) des Umschaltens der beiden Vierwegeventile (210, 216) zum Trennen des Filterhalters und des Reglers, und
- einer Etappe (308 bis 310) des Öffnens in Betriebsposition der Absperrventile nach der Etappe (307) des Umschaltens der Vierwegeventile zum Einlassen von Gas in den Filterhalter und den Regler.

## Claims

1. A gas expansion device (200) comprising a gasifier (104), a regulator pilot (112) and a filter holder (110), holding a filter and two cut-off valves (102, 106), placed upstream and downstream of the gasifier, **characterised in that** it further comprises:
- two valves with four channels (210, 216), adapted to isolate from the regulator and the pipe going from the regulator to the cut-off valves , the filter holder and the pilot and
- a bleeder valve (215) to put the isolated volume to the vent, limited between the two valves with four channels.

2. A device (200) according to the claim 1, wherein the two valves with four channels (210, 216) comprise:
- a first valve with four channels (210) of which one channel (208), connected to a pipe known as "upstream", going from the upstream cut-off valve (102) to the gasifier (104) and one channel (212) connected to the filter holder (110), are each connected, according to the position of the first valve with four channels, either to one channel (209) leading to the filter holder, or to one channel (211), leading back to the gasifier, and
- a second valve with four channels (216) of which one channel (218), connected to a pipe known as "downstream", going from the gasifier to the downstream cut-off valve (106) and one channel (214) connected to the regulator pilot (112), are each connected, according to the position of the second valve with four channels, either to one channel (213) leading to the regulator pilot, or to one channel (217), leading back to the downstream pipe.

3. A device (200) according to the claim 2, which comprises, additionally, a means (220, 225) of simultaneous activation of the valves with four channels (210, 216), for, in one position, connected to each other, the channels (209, 212) of the first valve with four channels connected to the filter holder (110) on the one hand, and the channels (213, 214) of the second valve with four channels to the pilot (112), on the other hand.

4. A device (200) according to the claim 3, wherein the means (220, 225) of activation comprises a level (225) connected to the two valves with four channels (210, 216), to simultaneously turn them from a first position to a second position, and back again.

5. A device (200) according to any one of the claims 1 to 4, which comprises, additionally, stainless steel channelling, forming at least one part of the channels connected to the valves with four channels (210, 216).

6. A device (200) according to any one of the claims 1 to 5, which comprises, additionally, perforations in the pieces which support the valves with four channels (210, 216), aiming to achieve deposits in the two positions of the valves with four channels.

7. A method of gas expansion, which comprises an operational phase, wherein the gas expands through a regulator (104) equipped with a filter held by a filter holder (110) and a pilot (112), **characterised in that** it comprises a response phase comprising:
- a step (304) of turning of the two valves with four channels (210, 216) to isolate from the regulator and the pipes going from the regulator to the cut-off valves, the filter holder and the pilot,
- a step (305) of bleeding the isolated volume,
- a step (306) of access to the filter holder and/or to the pilot, and
- a step (307) of turning of the valves with four channels to put the filter holder and pilot under gas.

8. A method according to the claim 7, which comprises, additionally,
- a step (302, 303) of closing the cut-off valves (102, 106) before the step (304) of turning of the two valves with four channels (210, 216) to isolate the filter holder and the pilot, and
- a step (308 to 310) of opening the cut-off valves in an operating position after the step (307) of turning of the valves with four channels to put the filter holder and the pilot under gas.
